# FASCICULE DE BREVET EUROPEEN

(11) **EP 1 607 762 B1**
(45) Date de publication et mention de la délivrance du brevet: **03.06.2009**
(21) Numéro de dépôt: 05291255.7
(22) Date de dépôt: 10.06.2005
(51) Int. Cl.: G01S 7/00, H01Q 1/34

(54) **Mâture multifonctions intégrée**
Integrierter Multifunktionsmast
Integrated multi-function mast

(30) Priorité: 11.06.2004 FR 0406362
(43) Date de publication de la demande: 21.12.2005
(73) Titulaire: DCN, 75015 Paris (FR)
(72) Inventeur: Pensec, Georges, 56850 Caudan (FR); Parneix, Patrick, 56260 Larmor Plage (FR); Pennec, Patrick, 56850 Caudan (FR); Quiltu, Denis, 56970 Ploemeur (FR); Le Rouzic, Sylvain, 56850 Caudan (FR); Mervin, Yves, 56100 Lorient (FR)
(74) Mandataire: Lagrange, Jacques Etienne M.M.

(56) Documents cités:
- EP-A- 1 505 688
- US-A- 5 014 068
- US-A- 5 417 597
- US-A1- 2003 052 833
- ANONYMOUS: "Netherlands - De Zeven Provincien Class Destroyer" ARTICLE INTERNET, [Online] octobre 2001 (2001-10), XP002315411 Extrait de l'Internet: URL:www.amiinter.com/samples/netherlands/N L1301.html> [extrait le 2005-01-27]
- MINISTRY OF DEFENCE NETHERLANDS: "FOCUS ON THE ROYAL NETHERLANDS NAVY" 1 juin 2002 (2002-06-01), MINISTRY OF DEFENCE NETHERLANDS , THE HAGUE , XP002315426 * page 1; figure 1 * * page 3; figure 1 *
- SADLER KARL-OTTO: "Trends im Überwasserschiffbau (Marine)" juillet 1999 (1999-07), MARINEFORUM. AUSGABE A, MITTLER, HERFORD, DE, PAGE(S) 8-25 , XP002252404 ISSN: 0172-8547 * page 16, colonne de gauche, ligne 1 - ligne 76; figure IMSEM *
- DIMITRIS V. DRANIDIS: "Shipboard phased-Array Radars" WAYPOINT, [Online] février 2003 (2003-02), pages 1-12, XP002315412 Extrait de l'Internet: URL:http://www.harpoonhq.com/waypoint/arti cles/Article_044.pdf> [extrait le 2005-01-27]
- ALAM MOHAMMAD F ET AL: "Fiber-optic network architectures for on-board radar and avionics signal distribution" IEEE 2000 INTERNATIONAL RADAR CONFERENCE;ALEXANDRIA, VA, USA, 7 mai 2000 (2000-05-07), - 12 mai 2000 (2000-05-12) pages 545-550, XP002315413 IEEE Nat Radar Conf Proc PISCATAWAY, NJ, USA
- SCOTT M.: 'SAMPSON MFR ACTIVE PHASED ARRAY ANTENNA' IEEE 2003 - 2003, pages 119 - 123, XP010676798
- BENSON J.L.: 'The AEM/S system, a paradigm-Breaking Mast, goes to sea' NAVAL ENGINNEERS JOURNAL no. EIX99084520796, 01 Juillet 1998 - 01 Juillet 1998, pages 99 - 103, XP009109753
- LUNDY G.M.; KVASLERUD O.: 'Improving the aegis combat system with high Speed Networks' PROCEEDING OF THE MILCOM 04 Novembre 1991 - 07 Novembre 1991, NEW YORK, pages 1098 - 1104, XP010042315

## Description

La présente invention est relative à une mâture multifonctions intégrée pour navire, et notamment pour navire à usage militaire, du type comprenant au moins une antenne radar lourde, et au moins un dispositif pouvant échanger un signal avec un moyen de traitement et/ou de commande disposé en dessous du niveau inférieur de la mâture.

Les navires à usage militaire, en particulier les navires armés, doivent être équipés d'une part de radars lourds du type radar multifonction ou du type radar de tir, et d'autre part de moyens électroniques tels que des moyens de guerre électronique ou de télécommunication. En général, ces différents équipements sont disposés sur au moins deux mâts. Il résulte de cette disposition des interférences électromagnétiques fonctionnelles ainsi que des masquages physiques qui affectent les performances opérationnelles des différents équipements. En particulier la couverture angulaire du radar multifonction est affectée, la sensibilité à des signaux faibles des moyens de guerre électronique est réduite, et enfin des signaux parasites peuvent être reçus par certains de ces équipements. En outre, les mâts ont des signatures radars importantes qui augmentent leur vulnérabilité.

Afin de limiter les interférences électromagnétiques fonctionnelles et afin de réduire la signature radar des mâts, on a proposé de rassembler le radar lourd et au moins une partie des moyens de guerre électronique et de télécommunication dans une seule mâture protégée par un radôme. Mais les mâtures proposées étaient de dimension considérable (40 tonnes et 30 mètres de haut), et donc inadaptées à des navires de moyen tonnage.

En outre, afin de réduire les interférences électromagnétiques entre le radar et les câbles de liaison entre les différents équipements et leur moyen de commande, d'exploitation et d'alimentation, on a proposé de disposer le radar à la partie supérieure de la mâture. Cette disposition n'est pas favorable à la stabilité du navire qui porte la mâture, en particulier lorsqu'il est de faible ou moyen tonnage.

Ces interférences électromagnétiques peuvent être limités en utilisant des radars lourds fixes comportant une pluralité d'antennes planes, tels que décrit dans le document SADLER KARL-OTTO « Trends im Überwasserschiffbau (Marine) juillet 1999, MARINE FORUM.AUSGABE A, MITTLER, HERFORD DE, pages 8 - 25, ce qui permet de disposer des équipements électroniques au-dessus du radar lourd.

Mais, de telles mâtures ne portent pas tous les équipements dont le navire à besoin, comme c'est le cas de la frégate de Classe de Zeven Provincien décrite dans les documents « NETHERLANDS. DE ZEVEN PROVINCIEN CLASS DESTROYER » et « FOCUS ON THE ROYAL NETHERLANDS NAVY » 1 Juin 2002, MINISTRY OF DEFENSE NETHERLANDS - The Hague. Cette frégate comporte, en outre un deuxième radar lourd qui est rotatif et qui, de ce fait ne peut pas être monté sur une mâture intégrée avec des équipements au-dessus de lui. Il en résulte, notamment, une augmentation de la signature radar du navire.

Le brevet US5417596 décrit une mâture multifonctions comportant plusieurs antennes radar et de communication, montées soit fixes soit rotatives suivant un alignement coaxial dans un même radôme.

Le document XP009109753, article de J.L. Benson publié dans le "Naval Engineers Journal", en Juillet 1998, sous le titre, "the AEM/S system, a Paradigm- Breaking Mast, goes to Sea" décrit une mâture multifonctions comportant plusieurs radomes superposés. Chaque radôme contient une antenne radar montée rotative, le premier radôme servant de base mécanique pour le deuxième radôme.

Le but de la présente invention est de remédier à ces inconvénients en proposant une mâture, notamment pour navire à usage militaire, qui puisse porter tous les équipements nécessaires tout en assurant les meilleures performances opérationnelles de ces équipements, qui soit adaptable à des navires de moyen et petit tonnage tout en permettant une maintenance facile, et qui en outre ait une signature radar limitée.

A cet effet, l'invention a pour objet une mâture multifonctions intégrée du type comprenant au moins une antenne radar lourde, au moins un dispositif électronique disposé au dessus de l'au moins une antenne radar lourde, pouvant échanger au moins un signal avec au moins un moyen de traitement et/ou de commande disposés en dessous du niveau inférieur de la mâture, et au moins un moyen de transmission d'au moins un signal entre ledit au moins un dispositif et ledit au moins un moyen de traitement et/ou de commande, dans laquelle l'au moins une antenne radar lourde est montée rotative autour d'un axe vertical, et ledit au moins un moyen de transmission comporte au moins un dispositif de conditionnement du signal pour le rendre insensible aux perturbations électromagnétiques, disposé au dessus de l'au moins une antenne lourde, l'au moins une antenne adar lourde étant disposée dans un radôme.

La partie supérieure de la mâture est fixée de façon amovible sur la partie supérieure du radôme par l'intermédiaire de pièces de liaison comportant des moyens de liaison mécaniques amovibles et éventuellement au moins un boîtier pour connecter de façon amovible les dispositifs situés au dessus de l'au moins une antenne radar lourde et les moyens de liaison avec des moyens de traitement, de commande ou d'alimentation de l'au moins un dispositif situé au dessus de l'antenne radar lourde.

L'au moins un dispositif de conditionnement du signal peut comprendre un convertisseur analogique/numérique, il peut également comprendre un convertisseur électronique/photonique et dans ce cas, le moyen de transmission comporte au moins une fibre optique, connectée au convertisseur électronique/photonique ou un moyen de transmission d'un faisceau optique ou électromagnétique sans support matériel.

La mâture multifonctions intégrée peut comprendre, en outre, au moins un moyen de traitement électronique du signal, disposé au dessus de l'au moins une antenne radar lourde.

De préférence, au moins un dispositif disposé au dessus de l'au moins une antenne radar lourde et pouvant échanger au moins un signal avec au moins un moyen de traitement et/ou de commande est, par exemple, un capteur électromagnétique sensible destiné notamment à la guerre électronique.

La mâture multifonctions intégrée peut comprendre une pluralité de dispositifs disposés au dessus de l'antenne radar lourde, une pluralité de ces dispositifs pouvant être des capteurs et/ou des émetteurs électromagnétiques, et par exemple, l'un au moins peut être une antenne de télécommunication et notamment une antenne de communication par satellite.

Au moins un dispositif disposé au dessus de l'au moins une antenne de radar lourde peut également être un équipement pris parmi un capteur d'environnement météorologique et un feu de signalisation.

De préférence, deux dispositifs disposés au dessus de l'au moins une antenne radar lourde, susceptibles de présenter une interférence électromagnétique fonctionnelle entre eux, sont disposés au dessus l'un de l'autre de façon à ne pas interférer.

La mâture multifonctions intégrée peut comporter une pluralité de moyens de liaisons entre au moins un dispositif disposé au dessus de l'au moins une antenne lourde et au moins un moyen de traitement, de commande ou d'alimentation, lesdits moyens de liaison étant constitués de câbles pouvant être soit sensibles aux perturbations électromagnétiques, soit insensibles aux perturbations électromagnétiques, soit générateurs de perturbations électromagnétiques, soit à la fois générateurs de perturbations électromagnétiques et sensibles aux perturbations électromagnétiques, et éventuellement d'au moins une canalisation de fluides de refroidissement.

L'au moins une antenne radar lourde peut être constituée d'une pluralité de panneaux plans disposés autour de l'axe vertical de la mâture en laissant libre un passage vertical pour l'ensemble des moyens de liaison entre les dispositifs disposés au dessus de l'antenne radar lourde et les moyens de traitement, de commande ou d'alimentation.

L'antenne radar lourde peut être une structure pivotant autour d'un axe généralement vertical et les moyens de liaison entre les dispositifs situés au dessus de l'antenne radar lourde et les moyens de traitement, de commande ou d'alimentation sont contenus dans au moins une goulotte s'étendant à la périphérie de la zone dans laquelle pivote l'au moins une antenne radar lourde. L'au moins une goulotte est adaptée pour minimiser les interférences électromagnétiques entre les moyens de liaison sensibles aux perturbations électromagnétiques ou générateurs de telles perturbations.

Les moyens de liaison sont par exemple des câbles qui, de préférence, sont disposés dans des goulottes distinctes selon qu'ils sont sensibles ou insensibles aux perturbations électromagnétiques ou générateurs de perturbations électromagnétiques.

Une goulotte comporte par exemple une pluralité de gaines définies par une structure métallique pouvant assurer une fonction de blindage électromagnétique.

De préférence, les goulottes et leurs dispositions sont conçues pour minimiser les interférences avec le faisceau électromagnétique de l'au moins une antenne de radar lourde. En particulier, les goulottes peuvent être recouvertes d'un matériau absorbant le rayonnement par un radar.

L'au moins une antenne radar lourde est disposée de préférence dans un radôme en matériau transparent aux ondes électromagnétiques de fréquence comprise dans la ou les bandes de fréquence de fonctionnement du ou des équipements contenus dans le radôme, et en particulier de l'au moins un radar.

Le radôme peut comporter, en outre, un dispositif pour assurer la sélectivité des ondes électromagnétiques qui ne laisse passer que les ondes dans la ou les bandes utiles pour les équipements contenus dans le radôme, en particulier pour le radar, et par exemple, une couche d'un matériau réfléchissant pour les ondes électromagnétiques de fréquence hors de la ou des bandes de fréquence utiles telle que la bande de fonctionnement du radar.

De préférence, le radôme ne comporte pas de paroi verticale. Il est, par exemple, de forme tronconique ou en tronc de pyramide.

De préférence, le radôme constitue la structure de support de la partie supérieure de la mâture. Cette structure est dimensionnée pour résister à des sollicitations violentes engendrées par exemple par l'onde de choc résultant de l'explosion d'une mine.

L'au moins une antenne radar lourde est par exemple l'antenne d'un radar du type multifonction ou conduite de tir ou surveillance aérienne ou maritime.

La mâture multifonctions intégrée est par exemple une mâture d'un navire armé, par exemple du type « navire de première ligne » (« front line ship »), utilisé comme centre de commandement, partie d'une force opérationnelle (« task force ») ou unité indépendante. De tels navires peuvent aussi assurer des missions de surveillance, de présence, de service public, d'évacuation de ressortissants etc...

L'invention concerne également un navire et notamment un navire armé équipé d'au moins une mâture selon l'invention.

De préférence, ce navire ne comporte qu'une seule mâture. Outre les avantages déjà cités, la mâture multifonctions intégrée, lorsqu'elle est unique, permet l'aménagement d'une passerelle offrant une visibilité optique sur 360°.

Une telle mâture peut être installée sur une grande diversité de navires, en particulier sur un porte-avion, mais elle est adaptée à des navires dont le déplacement peut être inférieur à 10.000 tonnes.

L'invention va maintenant être décrite de façon plus précise mais non limitative en regard des figures annexées dans lesquelles :
- la figure 1 représente un navire à usage militaire équipé d'une mâture multifonctions intégrée,
- la figure 2 représente une mâture multifonctions intégrée avec coupe partielle,
- la figure 3 est une vue de dessus d'un radôme d'une mâture multifonctions intégrée,
- la figure 4 est une vue de dessus d'un deuxième mode de réalisation d'un radôme de mâture multifonctions intégrée,
- la figure 5 est une vue d'une mâture multifonctions intégrée avec coupe partielle,

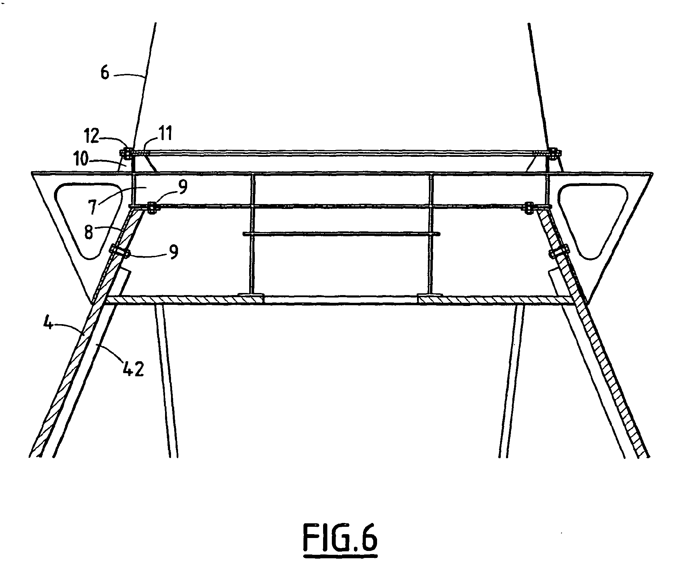

- la figure 6 est une vue agrandie, en coupe, de la liaison du radôme d'une mâture intégrée avec la structure disposée sur le radôme,
- les figures 7A, 7B, 7C, 7D et 7E, sont des vues en coupe transversale de goulottes pour radôme de mâture multifonctions intégrée.
- la figure 8 est une vue en coupe transversale d'une goulotte pour radôme de mâture multifonctions intégrée dont le radar permet un passage axial.

Dans la suite, les parties correspondantes des différentes figures comporteront les mêmes références.

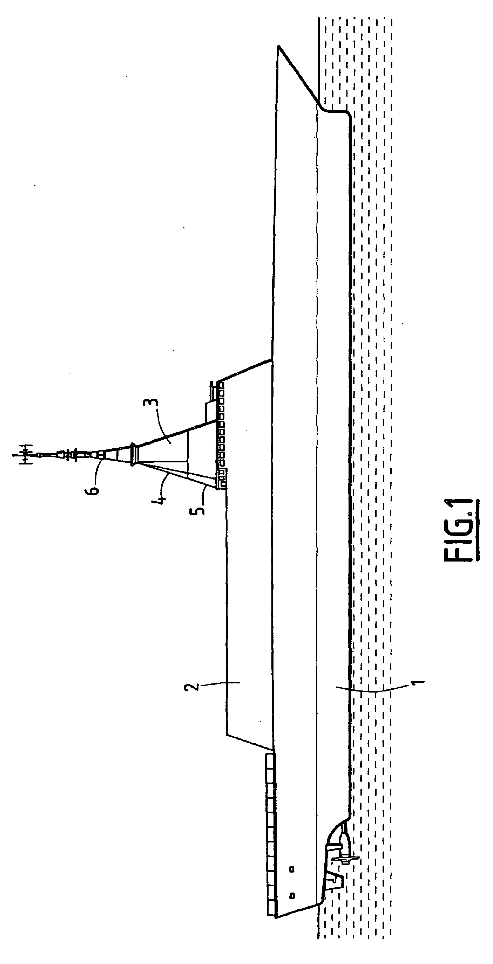

Le navire armé représenté à la figure 1 comporte de façon classique une coque 1 qui porte une super structure 2 sur laquelle est disposée une mâture intégrée 3 constituée d'un radôme 4 contenant un radar (non visible sur la figure), disposé au dessus d'un local technique 5, et surmonté par un mât 6 comportant au moins une antenne de guerre électronique ou des antennes de communication.

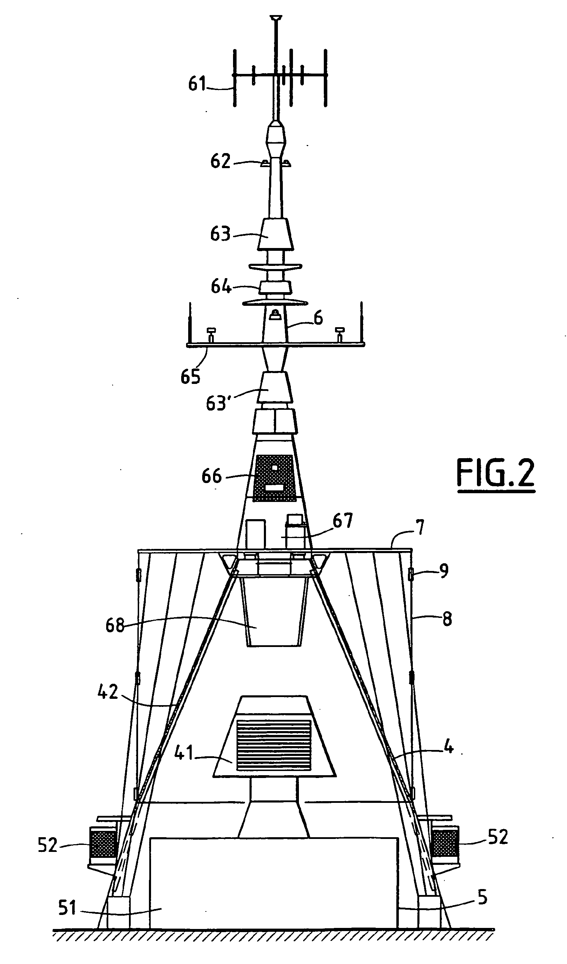

Dans un premier mode de réalisation représenté à la figure 2, le radôme 4 qui sera décrit plus en détail plus loin, contient un radar multifonction 41 comportant une antenne parabolique ou plane, montée rotative dans l'axe du radôme 4. Le radar 41 est disposé et relié à des équipements électroniques d'alimentation, de commande et de traitement disposés dans le local technique 5. La liaison de l'antenne radar 41 avec des équipements correspondant au radar, située dans le local technique 5, ainsi que les équipements sont connus en eux-mêmes de l'homme de métier.

Un support de drisse 7 supportant des drisses à pavillon 8 dont certaines portent des feux de navigation 9 s'étend transversalement au dessus du radôme 4. On notera que le support de drisses est de préférence en composite verre résine, pour être transparente aux ondes radar.

Le mât 6 disposé à la verticale du radôme 4 comporte, du haut vers le bas, à sa partie supérieure, un détecteur de signaux de communication 61 (appelé en anglais « CESM ») ; disposé en dessous, des feux de navigation 62 ; disposées en dessous de ces feux de navigation, des antennes de transmission 63 en dessous desquelles sont disposées des antennes de liaison tactiques 64 ; en dessous, disposés sur un support horizontal, des capteurs de navigation 65 qui sont notamment des anémomètres et des girouettes ; en dessous encore, d'autres antennes de transmission 63' ; en dessous, un dispositif détecteur de signaux radars 66 (dont l'acronyme en anglais est « RESM »). Tous ces équipements constituent les équipements classiques d'un mât de guerre électronique. Ils sont connus en eux-mêmes. En fonction des besoins, le mât peut porter d'autres équipements ou ne pas les porter tous.

On notera que tous les équipements qui vont des moyens de détection de signaux de communication aux détecteurs de signaux radars sont disposés au dessus des uns des autres dans l'axe vertical de la mâture intégrée. L'ordre dans lequel ils sont disposés est donné à titre d'exemple, d'autres ordres sont possibles ou souhaitables selon les circonstances. La disposition des dispositifs peut donc changer d'une mâture à l'autre et dépend de critères tels que la facilité de maintenance.

En outre, le mât comporte à sa base, et juste à la liaison avec le radôme 4, un local pour des coffrets électroniques 67, et en dessous et pénétrant à l'intérieur du radôme 4, un local 68 destiné à recevoir une climatisation. Cette disposition n'est donnée qu'à titre d'exemple, et d'autres sont possibles.

Ces différences d'équipement doivent être reliées à des moyens d'alimentation, de commande et de traitement disposés dans le local technique 5 pour d'une part être alimentées en puissance et d'autre part pour pouvoir échanger des signaux de commande et de mesure. Ces échanges qui se font en passant au travers du radôme 4 passent dans le champ du rayonnement de l'antenne radar 41. Or ces signaux échangés entre les équipements du mât de guerre électronique et le local technique 5, sont sensibles ou peuvent être sensibles aux interférences électromagnétiques. En particulier les signaux faibles en provenance des détecteurs de signaux de communication, ou bien les signaux en provenance des antennes réceptrices de transmission ou les signaux en provenance des détecteurs des signaux radars, de même que les signaux qui sont envoyés aux antennes de transmission pour être émis peuvent être perturbés par les ondes électromagnétiques émises par le radar 41 situé dans le radôme 4.

Afin de réduire, voire de supprimer les interférences électromagnétiques entre le radar 41 et les moyens de liaison entre le mât de guerre électronique et les équipements 51 disposés dans le local technique 5, les signaux faibles sensibles aux interférences électromagnétiques échangés entre les équipements du mât de guerre électronique et les équipements du local technique 5, sont conditionnés avant de traverser la zone définie par le radôme 4. Ce conditionnement consiste à transformer des signaux électriques ou électroniques analogiques, soit en des signaux électroniques numérisés, soit en des signaux optiques transmis par fibre optique. En effet, quand ils sont transférés par des conducteurs adaptés, à travers des zones soumises à des rayonnements électromagnétiques, les signaux numérisés ne sont pas perturbés par les rayonnements électromagnétiques. Il en est de même pour des signaux qui sont transmis par fibres optiques.

Dans une variante, les signaux optiques peuvent être transmis sans support matériel par un dispositif du type collimateur optique (émetteur optique associé à une lentille disposé en face d'une lentille associée à un détecteur optique).

Dans une autre variante, les signaux transmis peuvent être des signaux électromagnétiques, de préférence de fréquence élevée, transmis par un guide d'onde sans support matériel entre un dispositif émetteur et un dispositif détecteur.

Dans ces variantes, les signaux à transporter sont transformés par des convertisseurs électronique/ photonique, que ce soient des convertisseurs électronique/ optique ou électronique/ électromagnétique. De tels signaux, transmis sous forme d'un faisceau vertical ont l'avantage d'être insensibles au faisceau transverse émis par le radar. En outre, la transmission sans support matériel simplifie beaucoup les problèmes liés aux joints tournants.

Ces opérations de conditionnement par numérisation ou par transformation en signal optique sont faites pour les signaux qui sont envoyés par le mât de guerre électronique vers le local technique 5 et sont réalisées au pied du mât de guerre électronique dans le local électronique 67. Inversement, le conditionnement des signaux qui sont émis par les équipements électroniques 51 en direction du mât de guerre électronique sont conditionnés dans ces équipements électroniques 51 avant d'être envoyés à travers le radôme 4. On notera que les signaux qui sont conditionnés pour traverser la zone soumise à l'influence de rayonnement du radar 41, et qui sont envoyés vers le mât de guerre électronique 6, peuvent avoir besoin d'être remis en forme pour pouvoir être exploités par les équipements du mât de guerre électronique. En particulier les signaux qui ont été numérisés peuvent avoir besoin d'être retransformés en des signaux analogiques. De même des signaux qui ont été transformés en des signaux optiques pour pouvoir être véhiculés par des fibres optiques peuvent avoir besoin d'être retransformés en des signaux électroniques ou en des signaux électriques. Ce reconditionnement des signaux est effectué également dans le local électronique 67. Inversement les signaux qui sont reçus par les équipements électroniques 51 du local technique 5, sont déconditionnés par les équipements électroniques 51.

On notera que la mâture intégrée comporte également des brouilleurs de radar 52 (l'acronyme anglais étant « RECM »), ces brouilleurs de radar qui émettent des ondes électromagnétiques puissantes, sont situés au pied de la mâture intégrée, en dessous du niveau du radôme et au niveau de la partie supérieure du local technique 5.

Pour assurer ce conditionnement des signaux, lorsque le signal est transformé en un signal numérique, le conditionnement est réalisé à l'aide d'un convertisseur analogique/numérique et inversement pour la transformation inverse, et lorsqu'un signal est conditionné pour être transmis par l'intermédiaire d'une fibre optique, il est converti par un convertisseur électronique/photonique. Ces convertisseurs analogique /numérique ou électroniques/photoniques sont connus en eux-mêmes de l'homme du métier.

Outre les moyens de conditionnement des signaux, le local technique 67 disposé à la base du mât de guerre électronique peut contenir des moyens de prétraitement des signaux qui permettent par exemple de faciliter la transmission d'information vers les équipements de traitements dispersés au pied de la mâture intégrée.

Outre les signaux sensibles, les équipements du mât électronique peuvent recevoir, depuis le local technique 5, des alimentations en puissance qui se font par l'intermédiaire de câbles électriques qui traversent le radôme 4. Ils peuvent également échanger des fluides qui sont transmis par l'intermédiaire de canalisations qui traversent également le radôme 4.

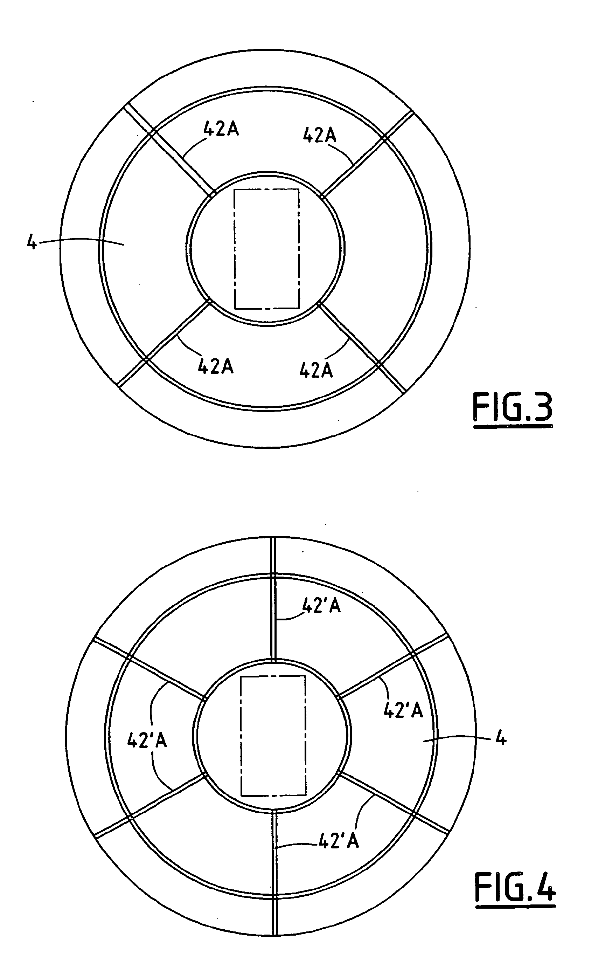

Dans le mode de réalisation représenté à la figure 2, le radar 41 comporte une antenne montée rotative autour d'un axe vertical qui se situe globalement dans l'axe du radôme 4 et qui ne permet pas le passage de câbles ou de canalisations dans cet axe. De ce fait, les moyens de transmission des signaux entre le local technique 5 et le mât électronique 6 ou bien les moyens de transmission de puissance ou de fluide ne peuvent passer qu'à la périphérie du radôme 4. Comme représenté à la figure 3 ou à la figure 4, les différents moyens de transmission sont disposés dans des goulottes 42 ou 42' qui sont disposées radialement autour du radôme 4. Il peut y avoir quatre goulottes comme représenté à la figure 3, six goulottes comme représenté à la figure 4, éventuellement plus ou éventuellement moins selon les besoins propres du mât considéré. En outre, le nombre et les dimensions des goulottes sont choisis de façon à minimiser les interférences qu'elles peuvent avoir avec le faisceau du radar 41. L'homme du métier sait choisir ces paramètres.

D'une façon générale les goulottes comportent une enveloppe métallique 10, par exemple en acier, revêtu d'une couche extérieure 11 d'un matériau absorbant des ondes radar ; un tel matériau est connu en lui-même.

La structure métallique 10 d'une goulotte délimite dans celle-ci deux ou plusieurs gaines, destinés à recevoir des câbles de nature différente. Selon la nature des signaux transportés, de leur impact sur l'environnement électromagnétique et leur sensibilité à l'environnement électromagnétique on distingue :
- les câbles dits sensibles, qui transportent des signaux qui peuvent être largement perturbés par des ondes électromagnétiques extérieures ; ces signaux sont par exemple des signaux analogiques de faible puissance,
- les câbles dits neutres, qui transportent des signaux insensibles aux perturbations électromagnétiques et n'engendrant pas de perturbations électromagnétiques ; ce sont par exemple les fibres optiques, ou encore les câbles transportant des signaux numériques,
- les câbles de type perturbateurs qui engendrent des perturbations électromagnétiques ; ce sont par exemple des câbles qui transportent de la puissance électrique,
- les câbles qui sont à la fois perturbateurs et sensibles ; ce sont par exemple des câbles qui transportent des signaux analogiques de puissance relativement importante, par exemple les signaux qui sont destinés à être émis par des antennes d'émission de télécommunication ou de signaux provenant d'antennes de réception.

Selon la nature des câbles qui sont disposés dans les goulottes, les goulottes comportent deux ou trois gaines et les câbles sont répartis dans chacune des gaines en fonction de leur nature en appliquant des règles que connaît l'homme du métier et qui sont destinées à éviter qu'il y ait des interférences entre les câbles d'une nature et des câbles d'une autre nature.

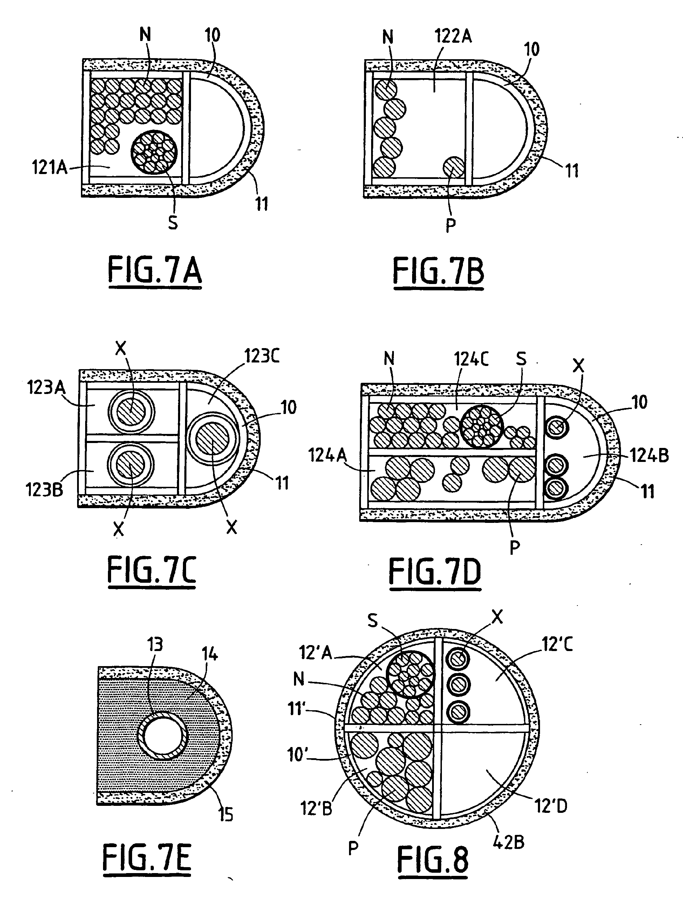

Une goulotte destinée à transporter des câbles de type sensible et des câbles neutre tels que représentés à la figure 7A comportent notamment une gaine 121 A dans laquelle sont réunis à la fois les câbles neutres N et les câbles sensibles S qui sont séparés. En effet, les câbles neutres et les câbles sensibles n'ont aucune raison d'interférer les uns avec les autres et par conséquent ils peuvent être disposés dans la même gaine.

Une goulotte destinée à transporter des câbles perturbateurs et éventuellement des câbles neutres tels que représentés à la figure 7B, comporte une gaine 122A dans laquelle sont disposés les câbles perturbateurs P et des câbles neutres N. En effet, ces câbles n'ont aucune raison d'interférer les uns avec les autres. On constatera que dans les deux goulottes qui viennent d'être décrites on n'a pas disposé dans les mêmes gaines des câbles perturbateurs et des câbles sensibles.

Une goulotte destinée à transporter des câbles perturbateurs et sensibles X comportent, comme représenté à la figure 7C, 3 gaines 123A, 123B et 123C, dans chacune desquelles est disposé un câble de type X. Les câbles de type X sont donc bien séparés les uns des autres et séparés par des cloisons métalliques en acier, conductrices de l'électricité, qui assurent une fonction de blindage et qui limitent les interactions entre les câbles.

Enfin, les goulottes peuvent comporter à la fois des câbles de type perturbateurs P, des câbles de type neutre N, des câbles de type sensibles S et des câbles de type perturbateur et sensible X. Dans de telles goulottes, la structure métallique interne définit trois gaines 124A, 124B et 124C. Dans la première gaine 124A ne sont disposés que des câbles perturbateurs P. Dans la deuxième gaine 124B ne sont disposés que des câbles de type X. Dans la troisième gaine 124C ne sont disposés que des câbles neutres N et des câbles sensibles S.

Avec ces dispositions, les interactions entre les différents types de câbles sont limitées. De plus, la structure métallique entourant l'ensemble des câbles protège les câbles sensibles contre les rayonnements électromagnétiques émis par le radar. Enfin la couche 11 de matériaux absorbant radar a pour effet d'éviter les réflexions des ondes radars sur les goulottes, qui pourraient perturber le fonctionnement du radar.

Comme on le constate sur des dessins, les goulottes ont une section rectangulaire étroite, dont un petit côté comporte une paroi en demi-cercle. Cette disposition est choisie pour minimiser l'interaction de la goulotte avec le rayonnement du radar.

Enfin, un dernier type de goulotte représenté à la figure 7E est utilisé pour faire passer les alimentations en fluide. Cette goulotte qui a une forme comparable à celle des autres goulottes, est constituée d'au moins un tube 13 pouvant être en matériau polymère ou métallique, entouré d'une garniture isolante 14, et d'une couche externe en matériau absorbant radar 15. Le tube 13 sert à transporter un fluide.

Le radôme 4 est une structure en matériau composite verre-résine transparent aux ondes électromagnétiques de fréquence comprise dans la bande de fréquence de fonctionnement du radar 41. Cette structure peut comporter également une couche d'un matériau réfléchissant les ondes électromagnétiques hors de la bande de fréquence de fonctionnement du radar. De tels matériaux fonctionnels sont connus en eux-mêmes et sont constitués par exemple de plaques du type circuit imprimé comportant des motifs adaptés. D'une façon générale, le matériau dont est constitué le radôme peut être un matériau sélectif en fréquence ne laissant passer que les longueurs d'ondes des équipements radar, grâce à des dispositifs passifs ou actifs connus en eux-mêmes.

On notera qu'il est possible de disposer dans le radôme d'autres équipements électroniques émetteurs ou récepteurs d'ondes électromagnétiques que le radar.

Dans le cas où de tels équipements sont présents, le radôme doit être adapté pour être transparent aux ondes électromagnétiques dans les bandes de fréquences utiles pour les équipements complémentaires.

Afin de réduire la signature radar du radôme, les parois du radôme ne sont pas verticales. Ainsi le radôme est, par exemple, soit de forme tronconique, soit en forme de tronc de pyramide. Lorsque le radôme est de forme tronconique, il est constitué d'une structure de révolution autour de son axe vertical. Lorsque le radôme est de forme pyramidale, ses parois sont constituées de panneaux-plan inclinés. Selon que la pyramide est à base carrée, pentagonale, hexagonale etc..., le radôme comporte 4, 5, 6 ou plus parois planes inclinées. Selon la forme et les contraintes de fabrication, le radôme peut être une structure monobloc ou être composé de plusieurs panneaux.

Le sommet du radôme est conçu pour pouvoir supporter le mât de guerre électronique 6 qui doit pouvoir être implanté au sommet du radôme et doit pouvoir être facilement démonté afin d'être changé rapidement. Pour cela, une structure métallique de liaison est disposée au sommet du radôme. Cette structure métallique constitue une coiffe 27 comportant une embase 28 de forme complémentaire de celle du sommet du radôme 4, et pouvant coiffer exactement le sommet du radôme. Elle est fixée au sommet du radôme par l'intermédiaire de boulons 29. La partie supérieure de la coiffe 27 comporte une embase 30 destinée à recevoir la base 31 du mât de guerre électronique 6 qui est fixée par l'intermédiaire de boulons 32. Ainsi, lorsque l'on souhaite démonter le mât de guerre électronique 6 pour le changer ou pour réaliser des opérations de maintenance, il suffit de dévisser les boulons 32 qui permettent de désolidariser le mât de guerre électronique de la coiffe 27, après avoir déconnecté toutes les liaisons électriques, et/ou électroniques, ou fluidiques, pouvant exister entre la case à équipements électronique situées au bas du mât de guerre électronique 6 et les moyens de liaison avec les équipement du local technique 5 situé sous le radôme.

On peut alors, par exemple, à l'aide d'une grue soulever le mât de guerre électronique.

On notera que la mâture intégrée doit pouvoir résister aux sollicitations résultant non seulement du vent, mais également des mouvements violents du navire pouvant résulter d'agressions diverses, telles que l'explosion de mines sous-marines. Le radôme doit être dimensionné en conséquence.

Dans le mode de réalisation qui vient d'être décrit, le radar 41 étant situé dans l'axe du radôme, les liaisons entre les équipements électroniques 51 et les équipements du mât de guerre électronique 6 sont faites par l'intermédiaire de goulottes 42 ou 42' situées à la périphérie du radôme 4.

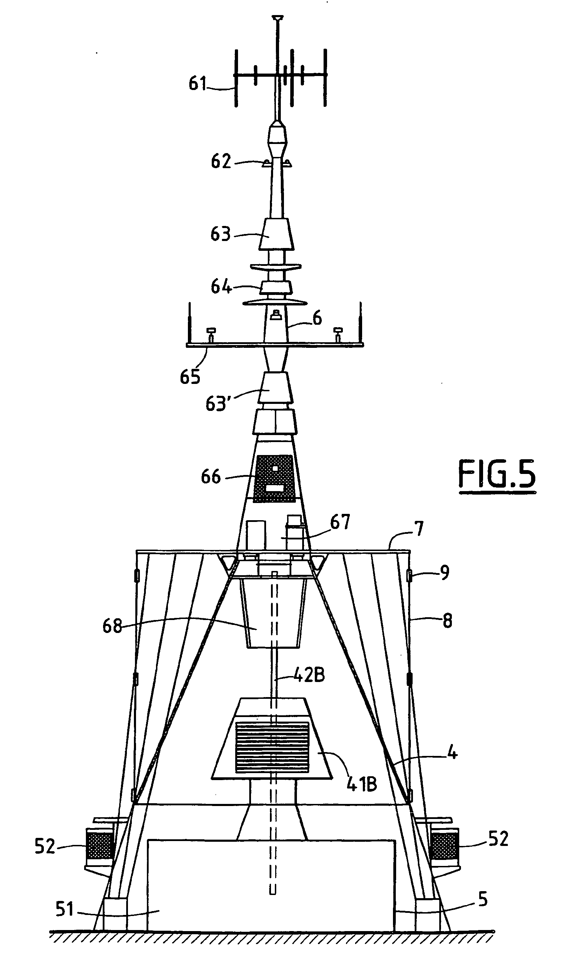

Mais d'autres solutions sont possibles, en particulier lorsque le radar n'est pas un radar à antenne parabolique et qu'il est par exemple un radar à antenne plane, de forme générale en tronc de pyramide qui peut être monté soit fixe soit rotatif autour d'un axe vertical et qui, dans le cas particulier, est conçu pour laisser de la place pour un passage de câbles ou de liaisons fluidiques dans son axe. Un tel radar correspond à un deuxième mode de réalisation représenté à la figure 5. Comme dans le cas précédent, la mâture intégrée comprend un radôme 4 disposé au dessus d'un local technique 5, et un mât de guerre électronique 6 disposé au dessus du radôme. Mais, le radôme 4 contient un radar multifonction à panneaux plans 41 B, monté rotatif autour de l'axe vertical de la mâture intégrée, et qui laisse, dans son axe vertical, un passage pour une goulotte 42B par laquelle passe l'ensemble des liaisons électroniques, de puissance ou fluidiques entre les équipements de contrôle, de commande et d'alimentation 51 situés dans le local technique 5, et l'ensemble des équipements électroniques du mât de guerre électronique 6. La goulotte centrale 42B qui sert à guider le passage des câbles ou des liaisons fluidiques entre le local technique 5 et le mât de guerre électronique 6 est constituée d'un tube à paroi métallique, par exemple en acier 10', comportant un revêtement extérieur 11' en matériaux absorbants les rayonnements radar, connu en lui-même. Le tube est décomposé en quatre gaines internes par l'intermédiaire de parois métalliques. La gaine 12'A reçoit des câbles de type sensible ou neutre, la gaine 12'B reçoit des câbles du type perturbateur, la gaine 12'C reçoit des câbles du type perturbateur et sensible, et enfin la gaine 12'D peut servir à recevoir des conduites de transport de fluide.

Dans ce mode de réalisation, la goulotte qui transporte les câbles passant dans l'axe du radar, les câbles ne sont pas soumis à l'influence des ondes électromagnétiques émises par le radar. De ce fait, les problèmes de protection contre les perturbations électromagnétiques sont réduits, et il reste essentiellement les problèmes de compatibilité électromagnétique entre les différents câbles de liaison entre les équipements électroniques du local technique 5 et les équipements de mât de guerre électronique 6. De ce fait, dans ce mode de configuration, il est possible de réduire le nombre de liaisons pour lesquelles il est prévu un conditionnement pour rendre des signaux insensibles aux perturbations électromagnétiques, et ainsi, de réduire les équipements électroniques disposés à la base de l'antenne de guerre électronique. Il en résulte une réduction du coût des équipements de liaison entre le mât de guerre électronique 6 et les équipements de l'électronique situés à la base de la mâture intégrée.

D'une façon générale, les dimensions d'une mâture intégrée telle qu'elle vient d'être décrite dépendent bien entendu du navire sur lequel elle est installée et de l'ensemble des équipements qu'on veut lui faire porter. Mais typiquement le radôme 4 qui contient un radar qui peut être un radar multifonction ou un radar de conduite de tir ou encore un radar de surveillance aérienne ou maritime, peut avoir une grande base ayant un diamètre de l'ordre de 8 mètres, et avoir une hauteur de l'ordre de 7,50 mètres avec au sommet d'un diamètre de l'ordre de 2,50 mètres à 3 mètres. L'ensemble constitué du radôme et du mât de guerre électronique peut avoir une hauteur globale de l'ordre de 32 mètres, et une masse de l'ordre de 4 à 5 tonnes, la part la plus importante de la masse étant située au niveau du radôme.

Avec de telles caractéristiques un mât de guerre électronique tel qu'il vient d'être décrit peut être monté sans difficulté sur un navire armé de déplacement inférieur à 10.000 tonnes, et par exemple sur du navire du type frégate de premier rang ou corvette.

La mâture intégrée telle qu'elle vient d'être décrite présente l'avantage, lorsqu'elle est seule sur le navire, de comporter un radar qui peut assurer une couverture de 360°. Il en est de même des équipements électroniques disposés sur le mât de guerre électronique. En particulier les capteurs peuvent avoir une couverture de 360° puisqu'il n'y pas d'obstacles qui occultent une partie de leur champ de couverture. Par ailleurs, ces capteurs ne sont pas perturbés par les ondes électromagnétiques en provenance du radar multifonction situé dans le radôme. Enfin les antennes d'émission ou de réception sont parfaitement libres d'émettre ou de recevoir sans rencontrer d'obstacles et sans être perturbés par des ondes électromagnétiques intenses émises par le radar. Enfin, la mâture ainsi conçue est une mâture dont le centre de gravité est rapproché de la base, ce qui est favorable à la stabilité du navire sur lequel elle est installée et à sa résistance au sollicitations mécaniques brutales.

La mâture telle qu'elle vient d'être décrite est adaptée à un navire armé. Mais, lorsque le radar multifonctions est un radar de surveillance, une telle mâture peut être installée sur un navire civil.

Enfin, une telle mâture peut être installée à terre, par exemple dans un aéroport ou dans une station terrestre de surveillance du trafic maritime.

## Revendications

1. Mâture multifonctions intégrée (3) du type comprenant au moins une antenne radar lourde (41, 41B), au moins un dispositif électronique (61, 62, 63, 63', 64, 65, 66) disposé au dessus de l'au moins une antenne radar lourde (41, 41B) pouvant échanger au moins un signal avec au moins un moyen de traitement et/ou de commande (51) disposés en dessous du niveau inférieur de la mâture, et au moins un moyen de transmission d'au moins un signal entre ledit au moins un dispositif et ledit au moins un moyen de traitement et/ou de commande, l'au moins une antenne radar lourde (41, 41 B) est monté rotative autour d'un axe vertical, ledit au moins un moyen de transmission comporte au moins un moyen de conditionnement du signal pour le rendre insensible aux perturbations électromagnétiques, disposé au dessus de l'au moins une antenne lourde, **caractérisé en ce que** l'au moins une antenne de radar lourde (41, 41B) est disposée dans un radôme (4) et **en ce que** le radôme (4) constitue la structure de support de la partie supérieure (6) de la mâture (3) et **en ce que** la partie supérieure de la mâture est fixée de façon amovible sur la partie supérieure du radôme par l'intermédiaire de pièces de liaison (7) comportant des moyens de liaison mécaniques amovibles (9) et au moins un boîtier pour connecter de façon amovible les dispositifs situés (61, 62, 63, 63', 64, 65, 66) au dessus de l'au moins une antenne radar lourde (41, 41B) et les moyens de liaison avec des moyens de traitement, de commande ou d'alimentation (51) de l'au moins un dispositif situé au dessus de l'antenne radar lourde.

2. Mâture multifonctions intégrée selon la revendication 1, **caractérisée en ce que** l'au moins un moyen de conditionnement du signal est un dispositif de conversion d'un signal du type convertisseur analogique/numérique, ou du type convertisseur électronique/photonique associé à au moins une fibre optique ou à un moyen de transmission d'un faisceau optique ou électromagnétique sans support matériel.

3. Mâture multifonctions intégrée selon la revendication 1 ou la revendication 2, **caractérisée en ce qu'**elle comprend, en outre, au moins un moyen de traitement électronique dudit au moins un signal, disposé au dessus de l'au moins une antenne radar lourde.

4. Mâture multifonctions intégrée selon l'une quelconque des revendications 1 à 3, **caractérisée en ce que** au moins un dispositif disposé au dessus de l'au moins une antenne radar lourde et pouvant échanger au moins un signal avec au moins un moyen de traitement et/ou de commande est un capteur électromagnétique sensible (61) destiné notamment à la guerre électronique.

5. Mâture multifonctions intégrée selon la revendication 4, **caractérisée en ce qu'**elle comprend une pluralité de dispositifs disposés au dessus de l'antenne radar lourde, pris parmi un ou plusieurs capteurs et/ou émetteurs électromagnétiques, tels qu'une antenne de télécommunication (63, 63', 64), une antenne de communication par satellite, un capteur d'environnement météorologique (65) et un feu de signalisation (62).

6. Mâture multifonctions intégrée selon la revendication 4 ou la revendication 5, **caractérisée en ce que** deux dispositifs (61, 63, 63', 64) disposés au dessus de l'au moins une antenne radar lourde, susceptibles de présenter une interférence électromagnétique fonctionnelle entre eux, sont disposés au dessus l'un de l'autre de façon à ne pas interférer.

7. Mâture multifonctions intégrée selon l'une quelconque des revendications 1 à 6, **caractérisée en ce que** l'au moins une antenne radar lourde (41B) est constituée d'une pluralité de panneaux plans disposés autour de l'axe vertical de la mâture en laissant libre un passage vertical pour l'ensemble des moyens de liaison entre les dispositifs (61, 62, 63, 63', 64, 65, 66) disposés au dessus de l'antenne radar lourde et les moyens de traitement (51), de commande ou d'alimentation.

8. Mâture multifonctions intégrée selon l'une quelconque des revendications 1 à 6, **caractérisée en ce que** l'antenne radar lourde (41) est une structure pivotant autour d'un axe généralement vertical et **en ce que** les moyens de liaison entre les dispositifs (61, 62, 63, 63', 64, 65, 66) disposés au dessus de l'antenne radar lourde et les moyens de traitement, de commande ou d'alimentation, sont contenus dans au moins une goulotte (42, 42') s'étendant à la périphérie de la zone dans laquelle est disposée l'au moins une antenne radar lourde, et adaptée pour minimiser les interférences électromagnétiques entre les moyens de liaisons sensibles aux perturbations électromagnétiques, insensibles aux perturbations électromagnétiques ou générateurs de perturbations électromagnétiques.

9. Mâture multifonctions intégrée selon l'une quelconque des revendications 1 à 8, **caractérisée en ce que** le radôme (4) est en matériau transparent aux ondes électromagnétiques de fréquence comprise dans la ou les bandes de fréquence de fonctionnement du ou des équipements contenus dans le radôme.

10. Mâture multifonctions intégrée selon la revendication 9 **caractérisée en ce que** le matériau dont est constitué le radôme (4) est, en outre, réfléchissant pour les ondes électromagnétiques de fréquence hors de la ou les bandes de fréquence de fonctionnement du ou des équipements contenus dans le radôme, et **en ce que** le radôme ne comporte pas de paroi verticale.

11. Mâture multifonctions intégrée selon l'une quelconque des revendications 1 à 10, **caractérisée en ce que** l'au moins une antenne radar lourde (41, 41B) est l'antenne d'un radar du type multifonction ou conduite de tir ou surveillance aérienne ou maritime.

12. Mâture multifonctions intégrée selon l'une quelconque des revendications 1 à 10, **caractérisée en ce qu'**elle est une mâture d'un navire, notamment d'un navire armé.

13. Navire, notamment navire armé, **caractérisé en ce qu'**il est équipé d'au moins une mâture selon la revendication 12.

14. Navire, notamment navire armé, selon la revendication 13, **caractérisé en ce qu'**il a un déplacement inférieur à 10 000 tonnes.

## Claims

1. Integrated multifunction mast structure (3) of the type comprising at least one heavy radar antenna (41, 41B), at least one electronic device (61, 62, 63, 63', 64, 65, 66) mounted above the at least one heavy radar antenna (41, 41B) that can exchange at least one signal with at least one processing and/or control means (51) mounted below the lower level of the mast, and at least one transmission means for at least one signal between said at least one device and said at least one processing and/or control means, wherein the at least one heavy radar antenna (41, 41B) is mounted to rotate around a vertical axis, said at least one transmission means comprises at least one means, which is mounted above the at least one heavy antenna, for conditioning the signal to render it insensitive to electromagnetic disturbances, **characterised in that** the at least one heavy radar antenna (41, 41B) is mounted in a radome (4), and **in that** the radome (4) forms the support structure of the upper section (6) of the mast (3), and **in that** the upper section of the mast is detachably secured on the upper section of the radome by means of connection elements (7) comprising detachable mechanical connection means (9) and at least one casing to detachably connect the devices (61, 62, 63, 63', 64, 65, 66) located above the at least one heavy radar antenna (41, 41B) and the connection means to processing, control or supply means (51) of the at least one device located above the heavy radar antenna.

2. Integrated multifunction mast structure according to claim 1, **characterised in that** the at least one means for conditioning the signal is an analog-to-digital type signal converter or electronic/photonic type converter associated with at least one optical fibre waveguide or an optical or electromagnetic beam transmission means without support equipment.

3. Integrated multifunction mast structure according to claim 1 or claim 2, **characterised in that** it additionally comprises at least one electronic processing means for said at least one signal mounted above the at least one heavy radar antenna.

4. Integrated multifunction mast according to any one of claims 1 to 3, **characterised in that** at least one device mounted above the at least one heavy radar antenna and able to exchange at least one signal with at least one processing and/or control means is a sensitive electromagnetic sensor (61) intended in particular for electronic warfare.

5. Integrated multifunction mast structure according to claim 4, **characterised in that** it comprises a plurality of devices mounted above the heavy radar antenna selected from one or more electronic sensors and/or emitters such as a telecommunications antenna (63, 63', 64), a satellite communications antenna, a meteorological sensor (65) and a signal lamp (62).

6. Integrated multifunction mast structure according to claim 4 or claim 5, **characterised in that** two devices (61, 63, 63', 64) mounted above the at least one heavy radar antenna capable of producing a functional electromagnetic interference between them are mounted one above the other in order not to cause interference.

7. Integrated multifunction mast structure according to any one of claims 1 to 6, **characterised in that** the at least one heavy radar antenna (41 B) is formed by a plurality of plane panels arranged around a vertical axis of the mast to leave a vertical passage free for the assembly of connection elements between the devices (61, 62, 63, 63', 64, 65, 66) mounted above the heavy radar antenna and the processing, control or supply means (51).

8. Integrated multifunction mast structure according to any one of claims 1 to 6, **characterised in that** the heavy radar antenna (41) is a structure that pivots around a generally vertical axis, and **in that** the connection means between the devices (61, 62, 63, 63', 64, 65, 66) mounted above the heavy radar antenna and the processing, control or supply means are contained in at least one channel (42, 42') extending on the periphery of the zone, in which the at least one heavy radar antenna is mounted, and adjusted to minimise electromagnetic interferences between the connection means sensitive to electromagnetic disturbance, insensitive to electromagnetic disturbance or generators of electromagnetic disturbance.

9. Integrated multifunction mast structure according to any one of claims 1 to 8, **characterised in that** the radome (4) is made of material that is transparent to electromagnetic waves of a frequency in the range of the operating frequency band or bands of the equipment contained in the radome.

10. Integrated multifunction mast structure according to claim 9, **characterised in that** the material the radome (4) is made from is additionally reflective to electromagnetic waves of a frequency outside the operating frequency band or bands of the equipment contained in the radome, and **in that** the radome does not have a vertical wall.

11. Integrated multifunction mast structure according to any one of claims 1 to 10, **characterised in that** the at least one heavy radar antenna (41, 41b) is the antenna of a multifunction type radar or fire control radar or air or sea surveillance radar.

12. Integrated multifunction mast structure according to any one of claims 1 to 10, **characterised in that** it is a mast structure of a ship, in particular an armoured ship.

13. Ship, in particular armoured ship, **characterised in that** it is equipped with at least one mast structure according to claim 12.

14. Ship, in particular armoured ship, according to claim 13, **characterised in that** it has a displacement of less than 10 000 tonnes.

## Patentansprüche

1. Integrierter Multifunktionsmast (3) des Typs, der aufweist: mindestens eine schwere Radarantenne (41, 41B), mindestens eine elektronische Vorrichtung (61, 62, 63, 63', 64, 65, 66), die über der mindestens einen schweren Radarantenne (41, 41B) angeordnet ist, die mindestens ein Signal mit mindestens einem Verarbeitungs- und/oder Steuermittel (51) austauschen kann, das unter der unteren Ebene des Mastes angeordnet ist, und mindestens ein Mittel zur Übertragung von mindestens einem Signal zwischen der mindestens einen Vorrichtung und dem mindestens einen Verarbeitungs- und/oder Steuermittel, wobei die mindestens eine schwere Radarantenne (41, 41B) drehbar um eine vertikale Achse montiert ist, wobei das mindestens eine Übertragungsmittel mindestens ein Mittel zur Aufbereitung des Signals aufweist, damit dieses gegenüber elektromagnetischen Störungen unempfindlich gemacht wird, das über der mindestens einen schweren Antenne angeordnet ist, **dadurch gekennzeichnet, dass** die mindestens eine schwere Radarantenne (41, 41B) in einer Radarkuppel (4) angeordnet ist, und dass die Radarkuppel (4) die Struktur zum Tragen des oberen Teils (6) des Mastes (3) bildet, und dass der obere Teil des Mastes lösbar an dem oberen Teil der Radarkuppel durch Anschluss-Stücke (7) befestigt ist, die mechanische lösbare Anschlussmittel (9) und mindestens ein Gehäuse aufweisen zum lösbaren Anschließen der Vorrichtungen (61, 62, 63, 63', 64, 65, 66) über der mindestens einen schweren Radarantenne (41, 41B) und der Anschlussmittel an die Mittel (51) zur Verarbeitung, Steuerung oder Speisung der mindestens einen Vorrichtung, die über der schweren Radarantenne positioniert ist.

2. Integrierter Multifunktionsmast gemäß Anspruch 1, **dadurch gekennzeichnet, dass** das mindestens eine Mittel zur Aufbereitung des Signals eine Signalumwandlungsvorrichtung des Typs eines Analog-Digital-Wandlers oder des Typs eines Photonen-Elektronen-Wandlers ist, der mit mindestens einem Lichtwellenleiter oder einem Mittel zur Übertragung eines optischen oder elektromagnetischen Strahlenbündels ohne Trägermaterial assoziiert ist.

3. Integrierter Multifunktionsmast gemäß Anspruch 1 oder Anspruch 2, **dadurch gekennzeichnet, dass** er ferner ein Mittel zur elektronischen Verarbeitung des mindestens einen Signals aufweist, das über der mindestens einen schweren Radarantenne angeordnet ist.

4. Integrierter Multifunktionsmast gemäß einem der Ansprüche 1 bis 3, **dadurch gekennzeichnet, dass** die mindestens eine Einrichtung, die über der mindestens einen schweren Radarantenne angeordnet ist und mit mindestens einem Verarbeitungs- und/oder Steuermittel mindestens ein Signal austauschen kann, ein empfindlicher elektromagnetischer Sensor (61) ist, der insbesondere für die elektronische Kriegsführung bestimmt ist.

5. Integrierter Multifunktionsmast gemäß Anspruch 4, **dadurch gekennzeichnet, dass** er eine Mehrzahl von über der schweren Radarantenne angeordneten Vorrichtungen aufweist, ausgewählt aus einem oder mehreren elektromagnetischen Sensoren und/oder Sendern, wie zum Beispiel einer Telekommunikationsantenne (63, 63', 64), einer Satelliten-Kommunikations-Antenne, einem meteorologischen Umgebungssensor (65) und einem Signallicht (62).

6. Integrierter Multifunktionsmast gemäß Anspruch 4 oder Anspruch 5, **dadurch gekennzeichnet, dass** zwei Vorrichtungen (61, 63, 63', 64), die über der mindestens einen schweren Radarantenne positioniert sind, die untereinander eine funktionelle elektromagnetische Interferenz aufweisen können, übereinander angeordnet sind, um keine Interferenzen zu erzeugen.

7. Integrierter Multifunktionsmast gemäß einem der Ansprüche 1 bis 6, **dadurch gekennzeichnet, dass** die mindestens eine schwere Radarantenne (41B) aus einer Mehrzahl von ebenen Paneelen gebildet ist, die um die vertikale Achse des Mastes angeordnet sind, wobei ein vertikaler Durchgang für die Gesamtheit der Anschlussmittel zwischen den Vorrichtungen (61, 62, 63, 63', 64, 65, 66), die über der schweren Radarantenne angeordnet sind, und den Mitteln zur Verarbeitung (51), Steuerung oder Speisung freigelassen ist.

8. Integrierter Multifunktionsmast gemäß einem der Ansprüche 1 bis 6, **dadurch gekennzeichnet, dass** die schwere Radarantenne (41) eine sich um eine im Wesentlichen vertikale Achse drehende Struktur ist, und dass die Anschlussmittel zwischen den Vorrichtungen (61, 62, 63, 63', 64, 65, 66), die über der schweren Radarantenne und den Mitteln zur Verarbeitung, Steuerung oder Speisung angeordnet sind, in mindestens einer Rinne (42, 42') enthalten sind, die sich am Rand des Bereichs erstreckt, in dem die mindestens eine schwere Radarantenne angeordnet ist, und die zum Minimieren der elektromagnetischen Interferenzen zwischen den Verbindungsmitteln, die gegen elektromagnetische Störungen empfindlich sind, die gegen elektromagnetische Störungen unempfindlich sind, oder die elektromagnetische Störungen erzeugen, eingerichtet ist.

9. Integrierter Multifunktionsmast gemäß einem der Ansprüche 1 bis 8, **dadurch gekennzeichnet, dass** die Radarkuppel (4) aus einem Material ist, das für elektromagnetische Wellen mit einer Frequenz innerhalb des oder der Funktions-Frequenzbänder der in der Radarkuppel enthaltenen Einrichtung oder Einrichtungen durchlässig ist.

10. Integrierter Multifunktionsmast gemäß Anspruch 9, **dadurch gekennzeichnet, dass** das Material, aus dem die Radarkuppel (4) gebildet ist, ferner elektromagnetische Wellen reflektiert, deren Frequenz außerhalb des oder der Funktions-Frequenzbänder der in der Radarkuppel enthaltenen Einrichtung oder Einrichtungen liegt, und dass die Radarkuppel keine vertikale Wand aufweist.

11. Integrierter Multifunktionsmast gemäß einem der Ansprüche 1 bis 10, **dadurch gekennzeichnet, dass** die mindestens eine schwere Radarantenne (41, 41B) die Antenne eines Radars des Multifunktions- oder Feuerleitradar- oder Luftraum- oder Seeüberwachungsradar-Typs ist.

12. Integrierter Multifunktionsmast gemäß einem der Ansprüche 1 bis 10, **dadurch gekennzeichnet, dass** er ein Mast eines Schiffes, insbesondere eines Kriegsschiffes ist.

13. Schiff, insbesondere Kriegsschiff, **dadurch gekennzeichnet, dass** es mit mindestens einem Mast gemäß Anspruch 12 ausgestattet ist.

14. Schiff, insbesondere Kriegsschiff gemäß Anspruch 13, **dadurch gekennzeichnet, dass** es eine Wasserverdrängung von weniger als 10000 Tonnen aufweist.
